# EUROPÄISCHE PATENTSCHRIFT

(11) **EP 1 439 107 B1**
(45) Veröffentlichungstag und Bekanntmachung des Hinweises auf die Patenterteilung: **02.04.2008**
(21) Anmeldenummer: 03029518.2
(22) Anmeldetag: 20.12.2003
(51) Int. Cl.: B62B 3/06, B66F 9/20, B62D 51/00, B62D 51/04

(54) **Flurförderzeug**
Industrial truck
Chariot de manutention

(30) Priorität: 15.01.2003 DE 10301292
(43) Veröffentlichungstag der Anmeldung: 21.07.2004
(73) Patentinhaber: STILL S.A.R.L., 77107 Meaux Cedex (FR)
(72) Erfinder: Brouart, Francois, 60280 Margny las compiagne (FR); Ferreira, Paulo, 60870 Rieux (FR); Krupka, Daniel, 60170 Cambronne (FR)
(74) Vertreter: Geirhos, Johann

(56) Entgegenhaltungen:
- EP-A- 1 016 578
- EP-A- 1 180 473
- PATENT ABSTRACTS OF JAPAN vol. 2002, no. 07, 3. Juli 2002 (2002-07-03) & JP 2002 087798 A (NIPPON YUSOKI CO LTD), 27. März 2002 (2002-03-27)

## Beschreibung

Die Erfindung betrifft ein Flurförderzeug, insbesondere einen deichselgelenkten Hubwagen, mit einer an einer Deichsel angebrachten Bedieneinheit mit mindestens einem Sicherheitsschalter und mit mindestens einer Antriebseinheit mit mindestens einer elektronischen Steuerung, wobei durch eine serielle Verbindung Befehle von der Bedieneinheit an die elektronische Steuerung der Antriebseinheit übertragbar sind und die Informationen des Sicherheitsschalters sowohl über die serielle Verbindung als auch über eine separate Analogverbindung zur elektronischen Steuerung übertragbar sind.

Flurförderzeuge der genannten Art sind meist als so genannte Mitgängerfahrzeuge ausgeführt. Dabei geht die Bedienperson vor oder neben dem Flurförderzeug her und lenkt das Flurförderzeug über eine Deichsel. In dieser Deichsel sind zumeist auch Bedienelemente angebracht, mit denen Antriebseinheiten des Flurförderzeugs gesteuert werden können. Neben einem Hubantrieb kann dies auch ein Fahrantrieb sein, für den die Bedienperson an der Deichsel Fahrtrichtung und -geschwindigkeit vorgeben kann.

Eine der größten Gefahren für vor dem Flurförderzeug gehende Bedienpersonen besteht darin, zwischen dem Flurförderzeug und einem festen Hindernis eingeklemmt zu werden. Insbesondere wenn die Bedienperson vor dem Flurförderzeug mit Blick zum Flurförderzeug rückwärts gehend dieses in ihre Richtung bewegt, kann sie ein hinter ihr befindliches Hindernis nicht erkennen, so dass sie leicht zwischen Deichsel und Hindernis eingeklemmt werden kann. Die Deichsel befindet sich dabei meist in Bauchhöhe, so dass ein erhebliches Verletzungsrisiko besteht. Aus diesem Grund wird bei vielen deichselgeführten Hubwagen ein Sicherheitsschalter in der Deichsel angebracht, bei dessen Betätigung ein Stopp des Flurförderzeugs oder eine der Betätigungsrichtung entgegengesetzte kurze Bewegung ausgelöst wird, so dass sich das Flurförderzeug von der eingeklemmten Bedienperson wieder entfernt.

Die Verbindung zwischen den Bedienelementen in der Deichsel und der Steuerung der Antriebseinheiten erfolgt mittlerweile häufig durch eine serielle Verbindung, beispielsweise mittels CAN-Bus oder ähnlichen Systemen. Dabei werden in der Bedieneinheit die durch die Bedienelemente vorgegebenen Befehle in ein digitales Protokoll übersetzt und an die Steuerung übertragen, die die Spannungsversorgung der elektrischen Antriebseinheiten und mögliche weitere Funktionen entsprechend dieser Befehle ansteuert. Auch eine Übertragung des Schaltzustandes des Sicherheitsschalters ist auf diesem Wege möglich. Gegenüber der Analog-Übertragung der Befehle ergibt sich so, besonders bei Flurförderzeugen mit vielen Funktionen, ein erheblich reduzierter Verkabelungsaufwand. Ein derartiges Fahrzeug ist in der EP 1 016 578 A1 beschrieben.

Digitale Informationsübertragungssysteme sind jedoch im Vergleich zu analoger Übertragung relativ anfällig gegenüber Störeinflüssen, da die Veränderung nur weniger oder sogar nur eines einzigen Bits bei der Übertragung zu einer vollständigen Änderung des Informationsgehalts der übermittelten Botschaft führen kann. Gerade bei sicherheitsrelevanten Informationen, wie der Stellung eines Schutzschalters, kann eine solche fehlerhafte Übertragung zu einer erheblichen Gefährdung der Bedienperson führen.

Der Erfindung liegt daher die Aufgabe zugrunde, ein Flurförderzeug, insbesondere einen deichselgeführten Hubwagen, mit einer an einer Deichsel angebrachten Bedieneinheit mit mindestens einem Sicherheitsschalter und mit mindestens einer Antriebseinheit mit mindestens einer elektronischen Steuerung, wobei durch eine serielle Verbindung Befehle von der Bedieneinheit an die elektronische Steuerung der Antriebseinheit übertragbar sind und die Informationen des Sicherheitsschalters sowohl über die serielle Verbindung als auch über eine separate Analogverbindung zur elektronischen Steuerung übertragbar sind, zu schaffen, bei dem die sichere Übertragung des Schaltzustandes des Sicherheitsschalters gewährleistet wird.

Diese Aufgabe wird erfindungsgemäß dadurch gelöst, dass die Steuerung derart ausgeführt ist, dass ein ständiger Vergleich der über die serielle Verbindung und die analoge Verbindung übertragenen Informationen des Sicherheitsschalters miteinander vorgenommen wird. Dadurch kann vorteilhafterweise erkannt werden, ob einer der beiden Informationswege beschädigt ist.

Vorteilhafterweise ist bei Aktivierung des Sicherheitsschalters eine Bewegung des Flurförderzeugs, die zur Entlastung des Schalters führt, und/oder ein Anhalten des Flurförderzeugs auslösbar. Dadurch wird verhindert, dass sich das Flurförderzeug weiter auf die den Sicherheitsschalter auslösende Person zubewegt und somit schwerere Verletzungen vermieden. Indem sich das Flurförderzeug so bewegt, dass der Sicherheitsschalter wieder freigegeben wird, wird ein dauerhaftes Einklemmen der Person verhindert.

In einer besonders vorteilhaften Ausbildung der Erfindung ist bei einer wesentlichen Abweichung der über die serielle Verbindung und der über die analoge Verbindung übertragenen Informationen voneinander eine Bewegung des Flurförderzeugs, die zur Entlastung des Schalters führt und/oder ein Anhalten des Flurförderzeugs und/oder eine Betätigung von einzelnen Antriebsfunktionen des Flurförderzeugs zur Erreichung eines möglichst sicheren Zustandes auslösbar. Dadurch nimmt das Flurförderzeug bei einer Störung eines der beiden Übertragungswege einen Zustand ein, der eine mögliche Gefährdung der Bedienperson minimiert.

Vorteilhaft ist es, wenn bei einer wesentlichen Abweichung der über die serielle Verbindung und der über die analoge Verbindung übertragenen Informationen voneinander ein Warnhinweis für die Bedienperson auslösbar ist. Dadurch wird die Bedienperson auf einen möglichen Defekt hingewiesen, selbst wenn sich das Flurförderzeug nicht in einem kritischen oder gefährlichen Zustand befindet, so dass das Entstehen eines solchen Zustandes vermieden werden kann.

Es ist weiterhin von Vorteil, wenn eine Vorrichtung zur Erkennung von Fehlfunktionen der Bedieneinheit vorhanden ist. Fehlfunktionen der Bedieneinheit sind für Benutzer aufgrund der Komplexität der Aufgaben und Funktionen der Bedieneinheit häufig nicht unmittelbar erkennbar, was zu einer erheblichen Gefährdung beim Betrieb des Flurförderzeugs führen kann.

Vorteilhafterweise sind Informationen der Vorrichtung zur Erkennung von Fehlfunktionen der Bedieneinheit über mindestens eine analoge Verbindung zur elektronischen Steuerung übertragbar. Die analoge Verbindung ist ein sicheres Mittel um die Informationen über eine mögliche Fehlfunktion an die elektronsiche Steuerung des Flurförderzeugs zu übertragen.

Weitere Vorteile und Einzelheiten der Erfindung werden anhand des in den schematischen Figuren dargestellten Ausführungsbeispiels näher erläutert. Dabei zeigt
- Figur 1: einen Hubwagen mit einer Deichsel in Seitenansicht,
- Figur 2: ein Schema der Verkabelung zwischen Bedieneinheit, Steuerung und Anzeigeeinheit eines erfindungsgemäßen Hubwagens.

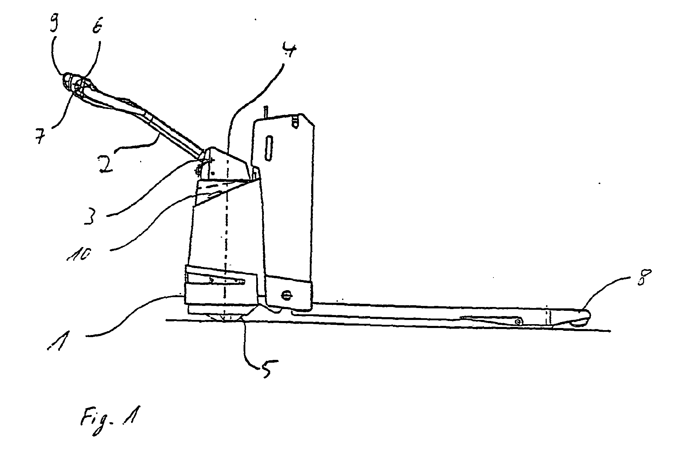

In Figur 1 ist ein Hubwagen 1 mit einer Deichsel 2 in Seitenansicht dargestellt. Die Deichsel 2 ist um eine horizontale Achse 3 schwenkbar, um für Bedienpersonen unterschiedlicher Größe gleichermaßen gut bedienbar sein. Durch eine Drehung der Deichsel 2 um eine vertikale Achse 4 wird durch die Drehung eines Antriebsrades 5 um eine vertikale Achse die Lenkung des Hubwagens 1 betätigt. Im Deichselkopf 6 sind Bedienelemente 7 untergebracht. Über diese kann beispielsweise Fahrtrichtung und -geschwindigkeit des Hubwagens 1 sowie Heben und Senken der Gabel 8 vorgegeben und ein akustisches Signal ausgelöst werden. Der Sicherheitschalter 9 ist an der Spitze des Deichselkopfs 6 angebracht. Es können aber auch an geeigneten anderen Stellen entsprechende Sicherheitschalter 9 angebracht werden, wenn sich dies aufgrund von erhöhter Kollisionsgefahr an diesen Stellen als notwendig erweist. In der dargestellten Stellung der Deichsel 2 wird bei Bewegung des Hubwagens 1 in Richtung des Pfeils bei einer Betätigung des Schalters 9 ein Stopp des Hubwagens 1 oder eine kurze Bewegung entgegengesetzt der Pfeilrichtung ausgelöst. Dadurch wird im Falle des Stopps der Schalter nicht weiter belastet und bei einer Bewegung des Hubwagens entgegen der Pfeilrichtung sogar entlastet. Informationen über den Zustand des Hubwagens 1 kann die Bedienperson beispielsweise über eine Anzeigevorichtung 10 erhalten.

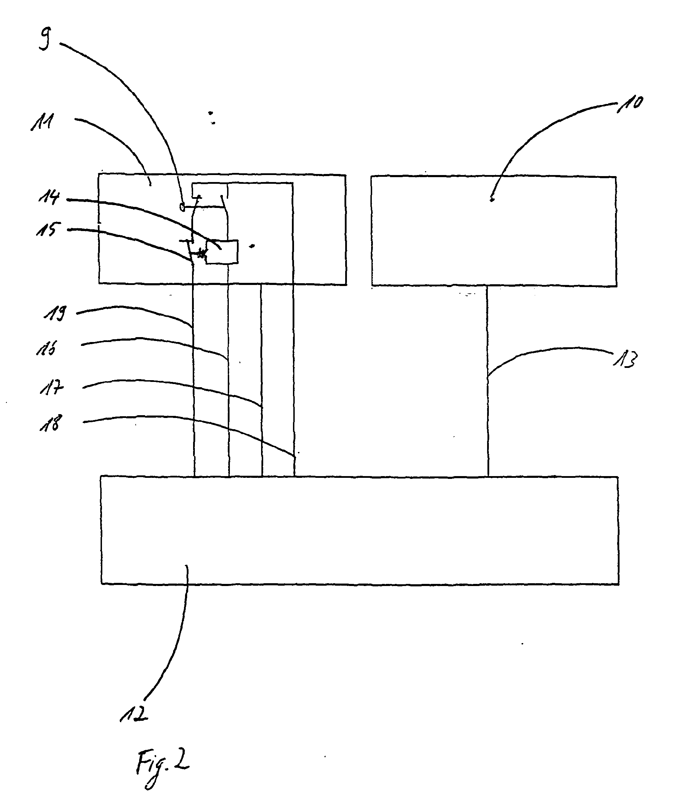

In Figur 2 ist schematisch ein Auszug aus dem Verkabelungsplan eines erfindungsgemäßen Hubwagens 1 dargestellt. Im Wesentlichen sind hierbei eine Bedieneinheit 11, die im Deichselkopf 6 untergebracht ist, eine elektronische Steuerung 12, die sich im Hubwagen 1 befindet, und eine Anzeigevorrichtung 10, die an geeigneter Stelle am Hubwagen 1, aber beispielsweise auch an der Deichsel 2 angebracht sein kann, dargestellt. Die Verbindung 13 zwischen der Steuerung 12 und der Anzeigevorrichtung 10 ist hier nur schematisch gezeigt und kann selbstverständlich auch aus mehreren Drähten, einer Glasfaserleitung, einer drahtlosen Verbindung oder anderen geeigneten Mitteln bestehen.

Von den einzelnen Elementen der im Deichselkopf 6 angebrachten Bedieneinheit 11 sind hier nur der Sicherheitsschalter 9, eine Elektronikeinheit 14 und ein weiterer Schalter 15 dargestellt. In die Elektronikeinheit integriert ist eine Vorrichtung zur Erkennung von Fehlfunktionen der Bedieneinheit 11. Die Elektronikeinheit 14 dient zur Umsetzung der von den nicht dargestellten Bedienelementen kommenden Befehle in ein über eine serielle Verbindungsleitung 16 zu übertragendes Datenformat. Die serielle Verbindung 16 kann selbstverständlich auch aus anderen geeigneten Mitteln als einer Kabelverbindung bestehen, wie beispielsweise einer Glasfaserleitung oder einer drahtlosen Verbindung über Funk oder Infrarot. Die einzelnen Bedienelemente im Deichselkopf 6 wie auch der Sicherheitsschalter 9, der Schalter 15 und die Elektronikeinheit 14 sind bevorzugt auf einer gemeinsamen Platine angeordnet, aber auch ein diskreter Aufbau ist möglich.

Die Spannungsversorgung der Bedieneinheit 11 erfolgt über die Zuleitungen 17 und 18. Im dargestellten Ausführungsbeispiel wird diese über die Steuerung 12 geführt, es ist aber auch eine direkte Anbindung an die Batterie des Flurförderzeugs 1 möglich, insbesondere, wenn die Betriebsspannung der Bedieneinheit 11 der Batteriespannung entspricht. Die erfindungsgemäße analoge Verbindung von Bedieneinheit 11 und Steuerung 12 erfolgt über die Leitung 19. Da der Sicherheitsschalter 9 nur für relativ geringe Ströme ausgelegt sein muss, kann das Kabel für die Leitung 19 entsprechend dünn und flexibel ausgeführt werden, so dass gegenüber einer rein seriellen Verbindung nur unwesentlich mehr Verkabelungsaufwand besteht.

Bei einer Betätigung des Sicherheitschalters 9 wird die Stromführung von der Spannungsversorgungsleitung 18 über den Schalter 9 und die Leitung 19 zur Steuerung 12 unterbrochen und die Steuerung 12 löst erfindungsgemäß eine Bewegung des Hubwagens 1, die zur Entlastung des Schalters 9 führt, und/oder ein Anhalten des Hubwagens 1 aus. Ein Anhalten des Hubwagens 1 hat den Vorteil, dass keine unvermutete Bewegung erfolgt. Dadurch wird eine Gefährdung von weiteren Personen durch den Hubwagen 1 selbst, aber auch beispielsweise durch sich aufgrund des plötzlichen Richtungswechsels lösende Ladung vermieden. Allerdings kann in diesem Zustand die Bedienperson bereits so schwer zwischen Deichsel 2 und Hindernis eingeklemmt sein, dass sie Verletzungen erleidet oder sich nicht mehr aus eigener Kraft befreien kann. Indem sich der Hubwagen 1 so bewegt, dass der Sicherheitsschalter 9 entlastet wird, wird ein Einklemmen der Person vermieden. Diese Bewegung erfolgt nur über eine nur kurze Strecke, zumeist annähernd entgegen der vorherigen Bewegungsrichtung, und schließt so die Verletzung von weiteren Personen mit ziemlicher Sicherheit aus, zumal, wenn das Flurförderzeug 1 ordnungsgemäß beladen ist. Bei einer Betätigung des Sicherheitsschalters 9 bei stehendem Hubwagen 1 wird sinnvollerweise kein Fahrimpuls ausgelöst, da sich der Hubwagen 1 schon in einem sicheren Zustand befindet.

Im gezeigten Ausführungsbeispiel steht der Sicherheitsschalter 9 auch mit der Elektronikeinheit 14 in Wirkverbindung, so dass der Schaltzustand des Sicherheitsschalters 9 ebenfalls in ein digitales Signal umgesetzt und an die Steuerung 12 übertragen wird. Gleichzeitig kann im gezeigten Ausführungsbeispiel die analoge Verbindungsleitung 19 über den Schalter 15 durch die in der Elektronikeinheit 14 integrierte Vorrichtung zur Erkennung von Fehlfunktionen der Bedieneinheit 11 unterbrochen werden.

In der Steuerung 12 findet ein Vergleich der über die analoge Verbindung 19 und der über die serielle Verbindung 16 übertragenen Informationen über den Schaltzustand der Schalter 9, 15 statt. Sollte eine Abweichung zwischen diesen beiden Informationen über einen hinreichend lang gewählten Zeitraum hinweg bestehen, so kann erfindungsgemäß beispielsweise durch Unterbrechen des Fahrstroms oder Betätigen einer Bremse der Hubwagen 1 gestoppt werden oder eine Bewegung des Hubwagens 1, die zur Entlastung des Schalters 9 führt, erfolgen; es kann aber auch ein akustisches Signal ausgelöst oder ein Signal an die Anzeigevorrichtung 10 übertragen werden, um dort einen Warnhinweis anzuzeigen. Eine Bewegung des Hubwagens 1 zur Entlastung des Schalters 9 ist insbesondere bei sich bewegendem Hubwagen sinnvoll, da das Abweichen eines der vom Sicherheitsschalter 9 übertragenen Werte vom anderen bedeutet, dass eine der beiden Verbindungen 16 und 19 eine Betätigung des Schalters 9 meldet, was auf das Anstoßen an ein Hindernis hindeuten könnte. Auch die Betätigung anderer Antriebe oder Funktionen, wie beispielsweise des Hubantriebs, kann unterbunden oder so gesteuert werden, dass ein möglichst sicherer Zustand hergestellt wird. Bei stillstehendem Hubwagen 1 sollte dagegen -möglichst nur eine Inbetriebnahme beziehungsweise das Bewegen des Hubwagens 1 unterbunden werden, da die Betätigung des Schalters 9 dabei nicht aus der Bewegung des Hubwagens 1 herrührt, sondern wahrscheinlich versehentlich geschehen ist. Der Zeitraum, innerhalb dessen eine Abweichung der über die analoge Verbindung 19 und der über die serielle Verbindung 16 übertragenen Informationen über den Schaltzustand des Sicherheitsschalters 9 erlaubt ist, ist hinreichend lang zu wählen, so dass im Betrieb sich möglicherweise ergebende Verzögerungen der Informationsübertragung über die serielle Verbindung 16 nicht zu Fehlalarmen führen können. Diese Verzögrungen können beispielsweise durch die Umsetzung des Schaltzustandes des Sicherheitsschalters 9 in ein digitales Signal und aufgrund der bei der seriellen Übertragung möglicherweise entstehenden Wartezeit bis zu einem Freiwerden der Leitung für die Übertragung der Information, sowie aufgrund möglicher kurzzeitiger Übertragungstörungen, die eine redundante Informationsübertragung oder die Überprüfung von Fehlerprotokollen bedingen, entstehen.

Die Vorrichtung zur Erkennung einer Fehlfunktion der Bedieneinheit 11 öffnet bei Vorliegen einer Fehlfunktion den Schalter 15, so dass die Steuerung 12 unabhängig von der Funktion der seriellen Verbindung 16 über das Bestehen einer sicherheitskritischen Situation aufgrund möglicher Fehlfunktionen der Bedieneinheit 11 informiert wird. Im einfachsten Fall wird dadurch eine identische Reaktion wie beim Ansprechen des Sicherheitsschalters 9 ausgelöst und das Flurförderzeug 1 in einen möglichst sicheren Zustand gebracht. Es sind auch weitere Ausführungsformen denkbar, beispielsweise, indem Informationen über eine Fehlfunktion zusätzlich über die serielle Verbindung übertragen werden, so dass ein Vergleich der über die serielle Verbindung 16 und der über die analoge Verbindung 19 übermittelten Information vorgenommen werden kann. Die Steuerung 12 kann so unterscheiden, ob der Sicherheitsschalter 9 betätigt wurde oder eine Fehlfunktion vorliegt und entsprechend unterschiedliche Maßnahmen einleiten. Bei einer Fehlfunktion wird bevorzugt eine Abschaltung der betroffenen Funktionen oder sämtlicher Funktionen des Hubwagens 1 vorgenommen werden. Zudem ist es möglich, Vorliegen oder Art der Fehlfunktion in der Anzeigevorrichtung 10 zu signalisieren. In einem nicht beanspruchten Ausführungsbeispiel ist auch möglich, separate analoge Verbindungen zwischen der Steuerung 12 und dem Sicherheitsschalter 9 beziehungsweise dem Schalter 15 vorzusehen, so dass die Unterscheidung der Art der Störung ohne Verwendung der seriellen Verbindung 16 möglich ist.

## Patentansprüche

1. Flurförderzeug, insbesondere deichselgelenkter Hubwagen (1), mit einer an einer Deichsel (2) angebrachten Bedieneinheit (11) mit mindestens einem Sicherheitsschalter (9) und mindestens einer Antriebseinheit mit mindestens einer elektronischen Steuerung (12), wobei durch eine serielle Verbindung (16) Befehle von der Bedieneinheit (11) an die elektronische Steuerung (12) der Antriebseinheit übertragbar sind und die Informationen des Sicherheitsschalters (9) sowohl über die serielle Verbindung (16) als auch über eine separate Analogverbindung (19) zur elektronischen Steuerung (12) übertragbar sind, **dadurch gekennzeichnet, dass** die Steuerung derart ausgeführt ist, dass ein ständiger Vergleich der über die serielle Verbindung (16) und die analoge Verbindung (19) übertragenen Informationen des Sicherheitsschalters (9) miteinander vorgenommen wird.

2. Flurförderzeug nach Anspruch 1, **dadurch gekennzeichnet, dass** durch eine Betätigung des Sicherheitsschalters (9) eine Bewegung des Flurförderzeugs (1), die zur Entlastung des Schalters (9) führt, und/oder ein Anhalten des Flurförderzeugs (1) auslösbar ist.

3. Flurförderzeug nach Anspruch 1 oder 2, **dadurch gekennzeichnet, dass** bei einer wesentlichen Abweichung der über die serielle Verbindung (16) und die analoge Verbindung (19) übertragenen Informationen voneinander eine Bewegung des Flurförderzeugs (1), die zur Entlastung des Schalters (9) führt, und/oder ein Anhalten des Flurförderzeugs (1) und/oder eine Betätigung von einzelnen Antriebsfunktionen des Flurförderzeugs (1) zur Erreichung eines möglichst sicheren Zustandes auslösbar ist.

4. Flurförderzeug nach einem der Ansprüche 1 bis 3, **dadurch gekennzeichnet, dass** bei einer wesentlichen Abweichung der über die serielle Verbindung (16) und die analoge Verbindung (19) übertragenen Informationen voneinander ein Warnhinweis für den Bediener auslösbar ist.

5. Flurförderzeug nach einem der Ansprüche 1 bis 4, **dadurch gekennzeichnet, dass** eine Vorrichtung zur Erkennung von Fehlfunktionen der Bedieneinheit (11) vorhanden ist.

6. Flurförderzeug nach einem der Ansprüche 1 bis 5, **dadurch gekennzeichnet, dass** Informationen der Vorrichtung zur Erkennung von Fehlfunktionen der Bedieneinheit (11) über mindestens eine analoge Verbindung (19) zur elektronischen Steuerung (12) übertragbar sind.

## Claims

1. Industrial truck, in particular drawbar-steered lift truck (1), comprising a service unit (11) attached to a drawbar (2), with at least one safety switch (9) and at least one drive unit with at least one electronic controller (12), wherein commands can be transmitted from the service unit (11) to the electronic controller (12) of the drive unit by a serial connection (16) and the information of the safety switch (9) can be transmitted via the serial connection (16) and also via a separate analogue connection (19) to the electronic controller (12), **characterised in that** the controller is designed such that a constant comparison of the information of the safety switch (9) transmitted via the serial connection (16) and the analogue connection (19) with one another is carried out.

2. Industrial truck according to claim 1, **characterised in that** a movement of the industrial truck (1) which leads to relieving the pressure on the switch (9) and/or a stopping of the industrial truck (1) can be triggered by actuating the safety switch (9).

3. Industrial truck according to claim 1 or 2, **characterised in that** in the event of a substantial deviation of the information transmitted via the serial connection (16) and the analogue connection (19) from one another, a movement of the industrial truck (1) which leads to relieving the pressure on the switch (9), and/or a stopping of the industrial truck (1) and/or an actuation of individual drive functions of the industrial truck (1) to reach a state which is as safe as possible can be triggered.

4. Industrial truck according to any one of claims 1 to 3, **characterised in that** in the event of a substantial deviation of the information transmitted via the serial connection (16) and the analogue connection (19) from one another, a warning indication for the operator is triggered.

5. Industrial truck according to any one of claims 1 to 4, **characterised in that** a device for recognising malfunctions of the service unit (11) is present.

6. Industrial truck according to any one of claims 1 to 5, **characterised in that** information from the device for recognising malfunctions of the service unit (11) can be transmitted via at least one analogue connection (19) to the electronic controller (12).

## Revendications

1. Chariot de manutention, notamment chariot élévateur (1) conduit avec le timon, ayant une unité de commande (11) installée sur le timon (2) avec au moins un interrupteur de sécurité (9) et au moins une unité d'entraînement à au moins une commande électronique (12),
une liaison en série (16) transmettant des ordres de l'unité de commande (11) à la commande électronique (12) de l'unité d'entraînement et les informations de l'interrupteur de sécurité (9) sont transmises à la fois par la liaison série (16) et par une liaison analogique distincte (19) vers la commande électronique (12),
**caractérisé en ce que**
la commande est réalisée pour effectuer une comparaison permanente des informations de l'interrupteur de sécurité (9), transmises par la liaison série (16) et celles transmises par la liaison analogique (19).

2. Chariot de manutention selon la revendication 1,
**caractérisé en ce que**
l'actionnement de l'interrupteur de sécurité (9), déclenche le mouvement du chariot de manutention (1) qui décharge l'interrupteur (9) et/ou déclenche l'arrêt du chariot de manutention (1).

3. Chariot de manutention selon la revendication 1 ou 2,
**caractérisé en ce qu'**
en cas d'écart important entre des informations transmises par la liaison série (16) et par la liaison analogique (19), un mouvement du chariot transporteur (1) se traduit par la décharge de l'interrupteur (9) et/ou un arrêt du chariot de manutention (1) et/ou un actionnement de certaines fonctions d'entraînement du chariot de manutention (1) pour se mettre dans un état aussi sécurisé que possible.

4. Chariot de manutention selon l'une des revendications 1 à 3,
**caractérisé en ce qu'**
en cas d'écart important entre les informations transmises par la liaison série (16) et celles transmises par la liaison analogique (19), un avertissement est déclenché pour le conducteur.

5. Chariot de manutention selon l'une des revendications 1 à 4,
**caractérisé par**
un dispositif détectant les défauts de fonctionnement de l'unité de commande (11).

6. Chariot de manutention selon l'une des revendications 1 à 5,
**caractérisé en ce que**
les informations du dispositif détectant les défauts de fonctionnement de l'unité de commande (11) sont transmises par au moins une liaison analogique (19) à la commande électronique (12).
